# EUROPÄISCHE PATENTANMELDUNG

(11) **EP 1 916 265 A1**
(43) Veröffentlichungstag der Anmeldung: **30.04.2008**
(21) Anmeldenummer: 06123031.4
(22) Anmeldetag: 26.10.2006
(51) Int. Cl.: C08F 220/54, C08F 8/32, C04B 24/00

(54) **Verfahren zur Herstellung von Amid- und Estergruppen aufweisenden Polymeren im festen Aggregatszustand**

(71) Anmelder: Sika Technology AG, 6340 Baar (CH)
(72) Erfinder: Sulser, Ueli, 8103, Unterengstringen (CH); Krapf, Anna, 8142, Uitikon Waldegg (CH); Velten, Ulf, 8102, Oberengstringen (CH)
(74) Vertreter: Sika Patent Attorneys

(57) **Zusammenfassung**

Die vorliegende Erfindung betrifft ein Verfahren zum Herstellen eines Amid- und Estergruppen aufweisenden Polymers **P** im festen Aggregatszustand, wobei im ersten Schritt (a) ein Homo- oder Copolymers **P1** von (Meth)acrylsäure, Itacon- oder Crotonsäure mit mindestens einer Monohydroxy-Verbindung **E** bei einer Temperatur bis 200°C zu einem Polymer **P2** umgesetzt wird, so dass neben Estergruppen Anhydridgruppen entstehen, wobei im zweiten Schritt (b) das im Schritt (a) hergestellte Polymer **P2** auf unter 60°C abgekühlt wird, so dass das Polymer **P2** im festen Aggregatszustand oder als unterkühlte Schmelze vorliegt, und wobei im dritten Schritt (c) das Anhydridgruppen aufweisende und im festen Aggregatszustand oder als unterkühlte Schmelze vorliegende Polymer **P2** mit mindestens einer Amin-Verbindung **A** bei Temperaturen unter 60 °C amidiert wird, wobei die im dritten Schritt (c) verwendete Amin-Verbindung **A** im festen Aggregatszustand oder auf oder in einem festen Trägermaterial vorliegt.

## Beschreibung

### Technisches Gebiet

Die vorliegende Erfindung betrifft die Gruppe der Amide und Estern von Polymeren aus α- β-ungesättigten Carbonsäuren.

### Stand der Technik

Polymere aus α- β-ungesättigten Carbonsäuren mit Polyalkylenglykol-Seitenketten werden bereits seit längerem in der Betontechnologie als Verflüssiger wegen ihrer starken Wasserreduktion eingesetzt. Diese Polymere haben eine Kammpolymerstruktur. Es gibt eine Reihe von solchen Kammpolymeren, welche neben Ester- und Carbonsäure-Gruppen auch Amidgruppen aufweisen.
Für die Herstellung dieser Polymere sind im Wesentlichen zwei Verfahren im Einsatz. Entweder werden Polymere aus den jeweiligen Carbonsäure-, Ester- und Amid-funktionenellen Monomeren durch radikalische Polymerisation oder in einer sogenannten polymeranalogen Umsetzung aus einem Polycarboxylpolymer und den jeweiligen Alkoholen und Aminen hergestellt.
Der Weg über die radikalische Polymerisation ist die gängigste Methode, sie ist allerdings bei speziellen Verbindungen erschwert durch die kommerzielle Verfügbarkeit der entsprechenden Monomere und deren Giftigkeit und bedarf einer aufwändigen Prozesskontrolle.
Die polymeranaloge Umsetzung weist den grossen Vorteil auf, dass aus kommerziell erhältlichen Polymeren aus α,-β ungesättigten Carbonsäuren, speziell aus Poly(meth)acrylsäuren durch Variation der Menge, der Art und dem Verhältnis von Alkohol und Amin in einfacher und sicherer Weise sehr unterschiedliche Kammpolymere mit sehr unterschiedlichen Eigenschaften erhalten werden können. In der polymeranalogen Umsetzung fällt durch die Verwendung der kommerziell erhältlichen Poly(meth)acrylsäuren der sicherheitstechnisch kritische Schritt der radikalischen Polymerisation weg.
Solche polymeranaloge Umsetzungen sind beispielsweise in EP 0 889 860 B1, EP 0 739 320 B1, sowie DE 100 15 135 A1 beschrieben.
Die polymeranaloge Umsetzung erfolgt nach dem heutigen Stand der Technik in einer säurekatalysierten Umsetzung von Carboxylgruppenenthaltenden Polymeren mit monofunktionellen, Amin- oder Hydroxylterminierten Derivaten bei Temperaturen von mindestens 140°C bis 200°C. Diese Umsetzungsbedingungen ergeben verschiedene Einschränkungen, die eine Umsetzung von tiefsiedenden primären oder sekundären Aminen verunmöglichen oder bei Verbindungen, die neben der primären oder sekundären Amingruppe noch Hydroxyl-Funktionen aufweisen, zu Vernetzungen führt.
Zum einen ist dem Fachmann bekannt, dass bei einer polymeranalogen Umsetzung von Carboxylgruppen-haltigen Polymeren die Zugabe von Verbindungen, die mehr als eine primäre oder sekundäre Amingruppe oder Verbindungen, die neben der primären oder sekundären Amingruppe noch Hydroxyl-Funktionen aufweisen zwangläufig zu einer Vernetzung der Carboxylgruppen-haltigen Polymeren führt. Eine solche Vernetzung ist jedoch nicht erwünscht, da sie zumindest zu einer Verminderung der Verflüssigungswirkung führt. Im Extremfall kann die Vernetzung auch dazu führen, dass die Reaktionsschmelze so stark vernetzt, dass sie nicht mehr aus einem Reaktor ausgebracht werden kann. Die Vernetzung kann selbst durch die Verwendung von Lösungsmitteln nicht unterdrückt werden.
Zum anderen haben viele primäre oder sekundäre Amine einen sehr niedrigen Siedepunkt und sind in der Gefahrenklassierung als explosionsgefährlich eingestuft, da sie mit Luft in bestimmten Mischverhältnissen und bei bestimmten Zündtemperaturen zu Explosionen führen können. Alle bis heute bekannten Umsetzungen gemäss einer polymeranalogen Umsetzung erfolgen entweder bei hohen Temperaturen von mind. 140°C und gegebenenfalls noch unter Anwendung von Vakuum oder Ein- beziehungsweise Überleiten eines Luft- oder Stickstoff-Stroms durch beziehungsweise über die Reaktionsmischung. Diese drastischen Bedingungen sind erforderlich, um das bei einer Kondensationsreaktion entstehende Wasser abzutrennen und damit eine vollständige Reaktion zu ermöglichen. Allerdings verunmöglichen, beziehungsweise erschweren und verteuern diese Bedingungen deutlich die Reaktion von tiefsiedenden primären oder sekundären Aminen in einer polymeranalogen Umsetzung, da die erforderlichen hohen Temperaturen meist über den Zündtemperaturen der Amine liegen. Weiterhin führt die Verwendung von Vakuum dazu, dass dadurch die ohnehin niedrigen Siedepunkte von tiefsiedenden primären oder sekundären Aminen gesenkt werden und unerwünschterweise durch das Vakuum der Reaktion entzogen werden. Die Verwendung eines Gasstromes, zur Entfernung des Reaktionswassers führt ebenfalls zu einem unerwünschten Austragen des Amins aus dem Reaktionsgefäss. Als Resultat beobachtet man eine unvollständige Reaktion, eine erhöhte Verunreinigung des Destillatwassers und eine erhöhte Belastung von Abgasfilter und Abluft.
Um dieses Problem zu umgehen wurde in EP1577327A1 ein zweistufiges Verfahren vorgeschlagen, bei dem in einem ersten Schritt carboxylhaltige Polymere nach polymeranaloger Umsetzung hergestellt werden, und in einem zweiten Schritt die im ersten Schritt gebildeten Anhydridgruppen mit einer Monoamin-Verbindung bei Temperaturen deutlich unter 100°C zum Amid umgesetzt werden. Bei diesem Verfahren wird im zweiten Schritt ein Amin und ein Lösungsmittel verwendet. Polymere in Lösungsmittel oder solche, die einen gewissen Flüssigkeitsanteil enthalten, sind jedoch nur bedingt lagerstabil. Es besteht zwar die Möglichkeit, das Lösungsmittel oder die Flüssigkeit in einem weiteren Schritt zu entfernen, insbesondere zu verdampfen. Dieser Schritt ist aber aufwändig und nur bedingt erfolgreich, da auch nach dem Verdampfen oder Sprühtrocknen ein bestimmter Anteil an Flüssigkeit vorhanden bleibt, welcher die Rieselfähigkeit des Pulvers, sowie den Schmelzpunkt des Polymers beeinträchtigt. Ein weiterer Nachteil beim Sprühtrocknen ist die zusätzliche Verwendung von Stabilisatoren, welche üblicherweise zugegeben werden müssen um einen oxidativen Abbau des Polymers zu verhindern. Stabilisatoren können auch zu einer ungewünschten Verfärbung des Polymers führen.

### Darstellung der Erfindung

Aufgabe der vorliegenden Erfindung ist es daher, ein Verfahren zur Verfügung zu stellen, bei dem die Nachteile des Standes der Technik überwunden werden und Polymere im festen Aggregatszustand hergestellt werden können, welche einfach modifiziert werden können, welche über längere Zeit lagerstabil und rieselfähig sind, und welche auch nach längerer Zeit noch die gewünschte Funktion aufweisen.
Überraschenderweise wurde gefunden, dass dies durch ein Verfahren gemäss Anspruch 1 erreicht werden kann, bei dem Polymere im festen Aggregatszustand oder in unterkühlter Schmelze mit festen Aminverbindungen, oder Aminverbindungen, welche auf oder in einem festen Trägermaterial vorliegen, vermischt werden. Es konnte nun überraschend festgestellt werden, dass beim Mischen vom festen Polymer oder von er unterkühlten Polymerschmelze mit festen Aminverbindungen die Amidierung der Anhydridgruppen des festen Polymers auch ohne Zugabe von Lösungsmittel oder einer Flüssigkeit zumindest soweit stattfindet, dass modifizierte Polymere mit hoher Qualität hergestellt werden können. Durch das Weglassen eines Lösungsmittels oder einer Flüssigkeit kann das feste Polymer einfach zu Pulver verarbeitet werden. Das erfindungsgemässe Verfahren erlaubt zudem, Ausgangspolymere in grosser Menge herzustellen und bei Bedarf je nach Verwendungszweck mit bestimmten Aminverbindungen zu vermengen. So können die Ausgangspolymere auch bequem vor Ort modifiziert und entsprechend angewendet werden. Zudem kann durch das erfindungsgemässe Verfahren die Verwendung von Stabilisatoren, insbesondere von Antioxidantien, vermieden werden.
Die nach dem vorliegenden Verfahren hergestellten Kammpolymeren eignen sich bestens als Verflüssiger für hydraulisch abbindende Zusammensetzungen. Weiterhin hat sich gezeigt, dass dank des erfindungsgemässen Verfahrens die Möglichkeit der Erzielung einer hohen Seitenkettendichte besteht sowie dass die so hergestellten Kammpolymere in Verwendung in hydraulisch abbindenden Zusammensetzungen zu einer verringerten Verzögerung des Erhärtungsvorganges sowie zu längerer Verarbeitungszeit führt. Wird die Reduktion der lonendichte im üblichen polymeranalogen Verfahren versucht, um die Eigenschaften des Polymere zu steuern, beispielsweise durch Erhöhung des Anteils der Estergruppen, kommt es ab einem bestimmten Veresterungsgrad zu sterischen Hinderung, welche die weitere Umsetzung erschwert, bis gar verunmöglicht. Durch die dadurch erhöhte thermische Belastung wird zudem die Gefahr der Polyetherspaltung der Seitenketten erhöht, was zu unerwünschter Vernetzung der Polymeren führt.
Die Erfindung umfasst zudem die Verwendung der nach dem erfindungsgemässen Verfahren hergestellten Polymere in hydraulisch abbindenden Zusammensetzungen. Weitere vorteilhafte Ausgestaltungen der Erfindung ergeben sich aus den **Unteransprüchen.**

### Wege zur Ausführung der Erfindung

Die vorliegende Erfindung betrifft ein Verfahren zum Herstellen eines Amid- und Estergruppen aufweisenden Polymers **P** im festen Aggregatszustand, umfassend die Schritte (a) Umsetzen eines Homo- oder Copolymers **P1** von (Meth)acrylsäure, Itacon- oder Crotonsäure mit mindestens einer Monohydroxy-Verbindung **E** bei einer Temperatur von bis 200°C zu einem Polymer **P2,** so dass neben Estergruppen Anhydridgruppen entstehen, (b) Abkühlen des im Schritt (a) hergestellten Polymers **P2** auf unter 60°C, so dass das Polymer **P2** im festen Aggregatszustand oder als unterkühlte Schmelze vorliegt, (c) Amidierung des Anhydridgruppen aufweisenden und im festen Aggregatszustand oder als unterkühlte Schmelze vorliegenden Polymers **P2** mit mindestens einer Amin-Verbindung **A** bei Temperaturen unter 60 °C; wobei die im Schritt (c) verwendete Amin-Verbindung **A** im festen Aggregatszustand oder auf oder in einem festen Trägermaterial vorliegt.

Unter "Monohydroxy-Verbindung" wird hier und im folgenden eine Substanz verstanden, die nur eine freie Hydroxylgruppe aufweist.

Unter "Monoamin-Verbindung" wird hier und im folgenden Ammoniak als Gas oder als wässrige Lösung oder eine Substanz verstanden, die nur eine freie primäre oder sekundäre Aminogruppe aufweist.
Unter 'Molekulargewicht' oder 'Molgewicht' versteht man im Sinne der Erfindung das Molekulargewichtsmittel M_{w}.
Unter "(Meth)acrylsäure" wird im gesamten vorliegenden Dokument sowohl Acrylsäure als auch Methacrylsäure verstanden.
Unter 'festen Polymeren' oder 'Polymere in festem Aggregatszustand' oder 'Amin-Verbindungen im festen Aggregatszustand' versteht man im Sinne der Erfindung Polymere oder Amin-Verbindungen, die bei Raumtemperatur im festen Aggregatzustand vorliegen und beispielsweise Pulver, Schuppen, Flocken, Pellets oder Platten sind und sich in dieser Form problemlos transportieren und lagern lassen. Eine Schmelze, beispielsweise eine Polymerschmelze, wird nicht als Polymer im festen Aggregatszustand im Sinne der vorliegenden Erfindung verstanden.

Das Homo- oder Copolymer **P1** von (Meth)acrylsäure, Itacon- oder Crotonsäure kann hierbei als freie Säure, als Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder CarboxylGruppen als Liganden umfasst.

Das Homo- oder Copolymer **P1** ist vorteilhaft ein Homo- oder Copolymer von Methacrylsäure und/oder Acrylsäure und/oder Methacrylsäuresalz und/oder Acrylsäuresalz. Das Homo- oder Copolymer **P1** wird bevorzugt erhalten aus einer Homopolymerisation von (Meth)acrylsäure, Itacon- oder Crotonsäure oder aus einer Copolymerisation von (Meth)acrylsäure, Itacon- oder Crotonsäure mit mindestens einem weiteren Monomer, welches ausgewählt ist aus der Gruppe umfassend α- β-ungesättigte Carbonsäuren, α- β-ungesättigte Carbonsäureester, α- β-ungesättigte Carboxylate, Styrol, Ethylen, Propylen, Vinylacetat sowie Mischungen davon. Bevorzugt ist das weitere Monomer ausgewählt aus der Gruppe umfassend Methacrylsäure, Acrylsäure, Crotonsäure, Itaconsäure, Maleinsäure, Fumarsäure, sowie deren Salze, Ester und Mischungen.
Bevorzugt als Copolymer **P1** ist ein Copolymer aus Acrylsäure und Methacrylsäure sowie deren Salze oder Teilsalze. Die Salze oder Teilsalze werden hierbei typischerweise nach der radikalischen Polymerisation erhalten.
Bevorzugt als Homopolymer **P1** ist Polymethacrylsäure oder Polyacrylsäure, insbesondere Polymethacrylsäure, deren Salze oder Teilsalze. Die Salze oder Teilsalze werden hierbei typischerweise nach der radikalischen Polymerisation erhalten.
**P1** ist bevorzugt ein Homopolymer.

Das Homo- oder Copolymer **P1** von (Meth)acrylsäure, Itacon- oder Crotonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere **P1** aus 10 bis 250, bevorzugt 20 bis 100, mehr bevorzugt 25 bis 60, Monomerbausteinen aufgebaut ist. Solche Homo- oder Copolymer **P1** von (Meth)acrylsäure sind kommerziell erhältlich.

Die Monohydroxy-Verbindung **E** ist bevorzugt ein C6- bis C20-Alkylalkohol oder weist die Formel (I) auf

HO-[(EO)ₓ-(PO)_{y}-(BuO)_{z}]-R¹ (I)

Die Indices x, y, z stellen hierbei unabhängig voneinander je die Werte 0 - 250 dar und deren Summe x+y+z ist 3 bis 250. Weiterhin bedeutet in Formel (I) EO=Ethylenoxy, PO=Propylenoxy, BuO=Butylenoxy oder Isobutylenoxy. Die Reihenfolge der EO-, PO-, bzw. BuO-Bausteine kann in irgendeiner möglichen Sequenz vorhanden sein. Schliesslich bedeutet der Substituent R¹ eine Alkylgruppe mit 1-20 Kohlenstoffatomen oder eine Alkylarylgruppe mit 7 - 20 Kohlenstoffatomen.
Bevorzugt sind Monohydroxy-Verbindung **E** der Formel (1), insbesondere mit einer Methyl-, Ethyl-, i-Propyl- oder n-Butylgruppe als Substituent R¹ sowie mit z=0. Bevorzugt handelt es sich bei **E** um Mischpolymerisate aus EO/PO. Noch mehr bevorzugt ist die Monohydroxy-Verbindung **E** ein einseitig endgruppenverschlossenes Polyethylenglykol.
Mischungen mehrerer unterschiedlicher Verbindungen der Gruppe **E** sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymereren aus Ethylenoxid und Propylenoxid oder einseitig endgruppenverschlossenen Polypropylenglykolen verwendet werden. Ebenso sind beispielsweise auch Mischungen von C6- bis C20-Alkylalkoholen und einseitig endgruppenverschlossenen Polyethylenglykolen möglich.
In einer bevorzugten Ausführungsform ist die Monohydroxy-Verbindung **E** ein einseitig endgruppenverschlossenes Polyalkylenglykol mit einem Molekulargewicht M_{w} von 300 bis 10'000 g/mol, insbesondere von 500 bis 5000 g/mol, bevorzugt von 800 bis 3000 g/mol.

In einem ersten Schritt (a) des erfindungsgemässen Verfahrens erfolgt die Umsetzung des Homo- oder Copolymers **P1** mit der Monohydroxy-Verbindung **E** bei einer Temperatur von bis 200°C zu einem Polymer **P2.** Die Temperatur für diese Umsetzung ist bevorzugt zwischen 140°C und 200°C. Die Reaktion ist aber auch bei Temperaturen zwischen 150°C und 175°C möglich. Eine derart hohe Temperatur ist nötig, um eine effiziente Veresterung zu erhalten.
In einer bevorzugten Ausführungsform wird dieser erste Schritt (a) in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.

In einer Ausführungsform wird im ersten Schritt (a) zusätzlich zur Monohydroxy-Verbindung **E** eine Monoamin-Verbindung **A'** eingesetzt. Dadurch erfolgt neben der Bildung von Ester- und Anhydridgruppen bereits im ersten Schritt (a) die Bildung von Amidgruppen. Die Monoamin-Verbindung **A'** weist einen Siedepunkt und Flammpunkt auf, der höher liegt als die Reaktionstemperatur des ersten Schrittes (a). Weiterhin darf die Monoamin-Verbindung **A'** keine Hydroxylgruppen enthalten.
Typische Beispiele solcher Monoamin-Verbindungen **A'** lassen sich durch die Formel (II') darstellen

R^{2'}NH-R^{3'} (II')

Einerseits können R^{2'} und R^{3'} zusammen einen Ring bilden, der gegebenenfalls Sauerstoff-, Schwefel- oder weitere Stickstoffatome enthält.
Beispiele für solche Monoamin-Verbindungen **A'** sind 9H-Carbazol, Indolin oder Imidazol.

Andererseits können R^{2'} und R^{3'} unabhängig von einander eine Alkylgruppe mit 8 bis 20 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Verbindung der Formel (III'), (IV') oder (V') oder H darstellen.

-R^{4'}-X(R^{5'})ᵥ (III')

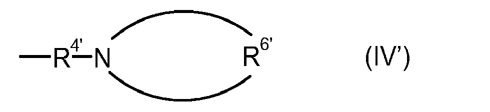

-[(EO)ₓ-(PO)_{y}-(BuO)_{z}]-R¹ (V')

R^{4'} stellt hierbei eine C1- bis C4-Alkylengruppe dar. R^{5'} stellt eine C₁- bis C₄-Alkylgruppe dar. X = S, O oder N, und v = 1 für X = S oder O, oder v=2 für X = N dar. R⁶' stellt eine Alkylengruppe, mit gegebenenfalls Heteroatomen, dar und bildet mit dem Stickstoffatom einen 5-er- bis 8-er-Ring, insbesondere einen 6-er-Ring. Der Substituent R¹ und die Indizes x, y und z weisen die Bedeutungen auf, wie sie bereits für die Verbindung der Formel (I) definiert wurden.
Beispiele für solche Monoamin-Verbindungen **A'** sind Dioctylamin, Distearylamin, Ditalgfettamin, Fettamine wie Stearylamin, Cocosfettamin, Octadecylamin, Talgfettamin, Oleylamin; 3-Butoxy-propylamin, Bis(2-methoxyethyl)-amin; α-Methoxy-ω-Amino-Polyoxyethylen, α-Methoxy-ω-Amino-Polyoxypropylen, α-Methoxy-ω-Amino-Oxyethylen-Oxypropylen-Copolymer.
Bevorzugt ist die Monoamin-Verbindungen **A'** ein primäres Monoamin. Besonderes bevorzugt als Monoamin-Verbindungen **A'** sind Verbindungen der Formel (II') mit R^{2'} gleich der Formel (V') und R^{3'} gleich H, insbesondere bevorzugt sind α-Methoxy-ω-Amino-Oxyethylen-Oxypropylen-Copolymere oder α-Methoxy-ω-Amino-Polyoxyethylene. Meist bevorzugt sind α-Methoxy-ω-Amino-Polyoxyethylene. Solche Monoamin-Verbindungen **A'** sind beispielsweise erhältlich aus einer Alkohol gestartete Polymerisation von Ethylen- und/oder Propylenoxid gefolgt von Umwandlung der terminalen Alkoholgruppe in eine Amingruppe.
Die Umsetzung des Homo- oder Copolymer **P1** mit der Monohydroxy-Verbindung **E** zu einem Polymer **P2** erfolgt typischerweise derart, dass zum Homo- oder Copolymer **P1** unter Rühren die Monohydroxy-Verbindung **E** zugegeben wird und auf die Umsetzungstemperatur aufgeheizt wird. Die Mischung wird bei der oben beschriebenen Umsetzungstemperatur weitergerührt und eventuell unter Vakuum oder durch Über- oder Durchleiten eines Gasstromes über beziehungsweise durch die Reaktionsmasse umgesetzt. Falls Monoamin-Verbindung **A'** eingesetzt wird, kann deren Zugabe gleichzeitig mit der Monohydroxy-Verbindung **E** oder aber zu einem späteren Zeitpunkt während des ersten Reaktionsschrittes erfolgen.

Nach der Umsetzung, die mittels Messung der Säurezahl mitverfolgt werden kann, wird das Reaktionsprodukt entweder weiterverarbeitet oder gelagert. Die Lagerung kann entweder in geheizten Behältnissen oder bei Raumtemperatur erfolgen. In letzterem Fall kann das Reaktionsprodukt vor der weiteren Verwendung wieder aufgeheizt werden, vorzugsweise bis zum Schmelzen.

In diesem ersten Schritt (a) bilden sich neben den Estern zwischen dem Homo- oder Copolymeren **P1** und der Monohydroxy-Verbindung **E** - und gegebenenfalls neben den Amiden zwischen dem Homo- oder Copolymeren **P1** und der Monoamin-Verbindung **A'** - auch Anhydridgruppen. Die Existenz dieser Anhydridgruppen kann sehr einfach mittels Infrarot-Spektroskopie bewiesen werden, da die Anhydridgruppe bekannterweise eine sehr intensive Doppel-Bande im Bereich von ~1800 cm⁻¹ und ~1760 cm⁻¹ aufweist.
Bevorzugt werden im ersten Schritt (a) keine Amine A' verwendet.

Nach dem ersten Schritt (a) können dem Polymer **P2,** vorzugsweise vor dem Verarbeiten der Polymerschmelze, insbesondere vor dem Erstarren der Polymerschmelze zum festen Polymer, noch andere Zusatzstoffe beigegeben, insbesondere beigemischt, werden. Solche Zusatzstoffe können beispielsweise Alkalien, wie beispielsweise Alkali- oder Erdalkalihydroxide, andere Dispergiermittel, wie beispielsweise sulfonierte Naphthalinkondensate, sulfonierte Melaminkondensate, Lignosulfonate, Polyacrylate, andere Polycarboxylate oder Abbinderverzögerer und/oder Abbindebeschleuniger für hydraulisch abbindende Bindemittel, Viskositätsmodifizierer, oberflächenaktive Substanzen wie Tenside oder Entschäumer, oder Schwindreduzierer sein.

Im zweiten Schritt (b) des erfindungsgemässen Verfahrens das im Schritt (a) hergestellten Polymers **P2** auf unter 60°C abgekühlt, so dass das Polymer **P2** im festen Aggregatszustand oder als unterkühlte Schmelze vorliegt. Vorzugsweise liegt das Polymer **P2** nach dem Abkühlen als Pulver, Flocken, Perlen, Platten oder Schuppen, oder als unterkühlte Schmelze vor.

Das im ersten Schritt (a) hergestellte Polymer **P2** kann in Gefässe abgefüllt werden um dort zu erstarren. Es kann aber auch kontinuierlich oder portionsweise mit dem Fachmann bekannten und geeigneten Mitteln zur Konfektionierung von handhabbaren Feststoffen weiterverarbeitet werden. Beispielsweise kann das im Schritt (a) beispielsweise als Schmelze vorliegende Polymer **P2** in Platten gegossen werden und, in dieser Form erstarrt, anschliessend zerkleinert werden, beispielsweise durch Zerhacken, Mahlen oder Pellettieren. Der Erstarrungsvorgang kann beispielsweise durch Kühlen beschleunigt werden. Als weiteres Beispiel für eine Weiterverarbeitung der Polymerschmelze kann die Polymerschmelze auch direkt granuliert werden, zum Beispiel mittels eines Kühlbades und eines Zerhackers. Oder das Abkühlen kann bei Raumtemperatur erfolgen, indem das im Schritt (a) hergestellte Polymer **P2** auf ein flaches Substrat gegossen und erstarren gelassen wird oder es kann auf einem zusätzlich gekühlten Substrat abgekühlt werden.

In einem dritten Schritt (c) wird das im ersten Schritt (a) gebildete und im zweiten Schritt (b) abgekühlte und im festen Aggregatszustand oder als unterkühlte Schmelze vorliegende Polymer **P2,** welches Anhydridgruppen neben Estergruppen und gegebenenfalls Amidgruppen aufweist, mit einer Amin-Verbindung **A** bei Temperaturen unter 60 °C, vorzugsweise unter 40°C umgesetzt. Bevorzugt erfolgt die Umsetzung zwischen 10°C und 60°C, besonders bevorzugt zwischen 15 und 40°C, noch mehr bevorzugt zwischen 20 und 30°C. Diese Umsetzung ist unter schonenden Bedingungen realisierbar und bedarf keines Vakuums, so dass auch Amin-Verbindungen **A** mit einem tiefen Siedepunkt oder aber Amin-Verbindungen **A,** welche zusätzlich zur Aminogruppe auch noch Hydroxylgruppen enthalten, eingesetzt werden können.
Die Amin-Verbindung **A-** weist bevorzugt die Formel (II) auf

R²NH-R³ (II)

Einerseits können R² und R³ zusammen einen Ring bilden, der gegebenenfalls Sauerstoff-, Schwefel- oder weitere Stickstoffatome enthält.
Beispiele für solche Amin-Verbindungen **A** sind insbesondere Piperidin, Morpholin, Pyrrolidin, 1,3-Thiazolidin, 2,3 -Dihydro-1,3-thiazol, Imidazol. Besonders geeignet ist Morpholin.

Andererseits können R² und R³ unabhängig von einander eine Alkylgruppe mit 1 bis 12 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Hydroxyalkylgruppe, insbesondere -CH2CH2-OH oder -CH2CH(OH)CH3, eine Verbindung der Formel (III), (IV) oder (V) oder H darstellen.

-(R⁴-X)ₙR⁵ (III)

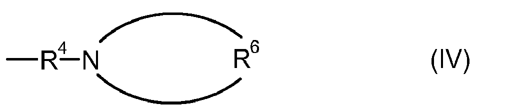

-[(EO)ₓ-(PO)_{y}-(BuO)_{z}-]R¹ (V)

R⁴ stellt hierbei unabhängig voneinander eine Alkylengruppe, vorzugsweise eine C1- bis C4-Alkylengruppe, dar. R⁵ stellt C₁- bis C₄-Alkylgruppe, eine Hydroxyalkylgruppe oder H dar. X stellt unabhängig voneinander ein S, O oder NR⁷dar, wobei n ein Wert zwischen 1 und 100 ist, und wobei R⁷ unabhängig voneinander eine C₁- bis C₄-Alkylgruppe, eine Hydroxyalkylgruppe oder H darstellt. R⁶ stellt eine Alkylengruppe, mit gegebenenfalls Heteroatomen, dar und bildet vorzugsweise mit dem Stickstoffatom einen 5-er- bis 8-er-Ring, insbesondere einen 6-er-Ring. Der Substituent R¹ und die Indizes x, y und z weisen die Bedeutungen auf, wie sie bereits für die Verbindung der Formel (I) definiert wurden.

Als Hydroxyalkylgruppe bevorzugt ist die Gruppe -CH₂CH₂-OH oder -CH₂CH(OH)CH₃.
Geeignete Amin-Verbindung **A** sind beispielsweise Ammoniak, Butylamin, Hexylamin, Octylamin, Decylamin, Diethylamin, Dibutylamin, Dihexylamin, Cyclopentylamin, Cyclohexylamin, Cycloheptylamin und Cyclooctylamin, Dicyclohexylamin; 2-Phenyl-ethylamin, Benzylamin, Xylylamin; N,N-Dimethyl-ethylendiamin, N,N-Diethylethylendiamin, 3,3'-Iminobis(N,N-dimethylpropylamin), N,N-Dimethyl-1,3-propandiamin, N,N-Diethyl-1,3-propandiamin, N,N,N'-Trimethyl-ethylendiamin, 2-Methoxy-ethylamin, 3-Methoxy-propylamin; Ethanolamin, Isopropanolamin, 2-Aminopropanol, Diethanolamin, Diisopropanolamin, N-isopropyl-ethanolamin, N-Ethyl-ethanolamin, N-Butyl-ethanolamin, N-Methyl-ethanolamin, 2-(2-aminoethoxy)ethanol; 1-(2-Aminoethyl)-piperazin, 2-Morpholino-ethylamin, 3-Morpholino-propylamin.
Besonders bevorzugt ist die Amin-Verbindung **A** ausgewählt aus der Gruppe umfassend Ammoniak, Morpholin, 2-Morpholin-4-yl-ethylamin, 2-Morpholin-4-yl-propylamin, N,N-Dimethylaminopropylamin, Ethanolamin, Diethanolamin, 2-(2-aminoethoxy)ethanol, Dicyclohexylamin, Benzylamin, 2-Phenyl-ethylamin, Polyoxypropylendiamin wie beispielsweise Jeffamin® D230, N-(2-Hydroxyethyl)ethylendiamin, sowie andere Amine, welche beispielsweise von der Firma Huntsman unter dem Namen Jeffamine® vertrieben werden, sowie Mischungen davon. Ammoniak kann als Gas oder in einer wässrigen Lösung verwendet werden.
Die Amin-Verbindung **A** kann auch ein Monoamin-Verbindung **A'** sein, auch wenn dies nicht bevorzugt ist.

Für die Umsetzung im dritten Schritt (c) wird entweder eine Amin-Verbindung **A** verwendet, welche bei der Verarbeitungstemperatur von unter 60 °C, vorzugsweise zwischen 10°C und 60°C, besonders bevorzugt zwischen 15 und 40°C, noch mehr bevorzugt zwischen 20 und 30°C, in festem Aggregatszustand, vorzugsweise als Pulver oder festes Kristall vorliegt. Falls die Amin-Verbindung **A** bei der Verarbeitungstemperatur im dritten Schritt (c) nicht im festen Aggregatszustand vorliegt, beispielsweise falls sie flüssig ist, wird die Amin-Verbindung auf ein festes Trägermaterial aufgezogen oder in ein festes Trägermaterial eingeschlossen.
Als geeignetes festes Trägermaterial kommt beispielsweise ein mineralisches Bindemittel, ein hydraulischer Zusatzstoff, Kieselsäure, ein Molekularsieb, Kreide, Steinmehl, Calciumhydroxyd, Gips, Silica, Silica Fume, Aluminiumoxid, Aluminiumhydroxid, Vermiculite, Lehm, Ton oder Bentonit in Frage. Als Silica ist beispielsweise Silica Pulver geeignet wie z.B. Sipernat®, erhältlich von Degussa. Besonders bevorzugt als festes Trägermaterial ist Zement, Gips, Hüttensand oder Kieselsäure. Als Gips kann sowohl Calciumsulfat-Dihydrat, Calciumsulfat-Hemihydrat, wie auch Calciumsulfat-Anhydrit eingesetzt werden. Vorzugsweise ist das Trägermaterial basisch.

In einer bevorzugten Ausführungsform erfolgt der dritte Schritt (c) dadurch, dass das feste Amin **A** mit dem Polymer **P2** aus dem zweiten Schritt (b), welches in fester Form, etwa als Pulver oder in Form von Schuppen, oder eines Granulates, oder als unterkühlte Schmelze vorliegt, unter Rühren, beispielsweise in einer Mühle, vermischt wird. Falls das Polymer **P2** nach Schritt (b) als unterkühlte Schmelze vorliegt, kann das Polymer P im festen Aggregatszustand dadurch hergestellt werden, indem nach Schritt (c) das mit dem festen Amin **A** zusammengeführte Polymer **P2** erstarren gelassen und anschliessend zerkleinert wird, beispielsweise durch Zerhacken, Mahlen oder Pellettieren.

Das erfindungsgemässe Verfahren ermöglicht die Herstellung eines Amid- und Estergruppen aufweisenden Polymers **P** im festen Aggregatszustand ohne die zusätzliche Verwendung einer Flüssigkeit, insbesondere eines Lösungsmittels. Dadurch kann der Schritt des Entfernens des Lösungsmittels eingespart werden, was zeitsparend wie auch oekonomischer ist.
Bei herkömmlichen Methoden kann, falls gewünscht, beispielsweise durch Anlegen eines Vakuums und/oder Heizen das Lösungsmittel entfernt werden. Beim Sprühtrocknen müssen üblicherweise zudem zusätzlich Stabilisatoren, insbesondere Antioxidantien, zugegeben werden, um einen oxidativen Abbau des Polymers zu verhindern. Bei diesen Verfahren entstehen aber Polymere, welche immer noch einen geringen Wasseranteil aufweisen. Dies ist besonders für die Lagerung sowie für die Rieselfähigkeit von Trockenmischungen, welche dieses Polymer enthalten, nachteilig. Zudem wird durch den Wasseranteil der Schmelzpunkt des Polymers gesenkt.

Im Gegensatz dazu braucht es für die Herstellung eines Amid- und Estergruppen aufweisenden Polymers **P** im festen Aggregatszustand nach dem erfindungsgemässen Verfahren weder eine zusätzliche Verwendung einer Flüssigkeit, insbesondere eines Lösungsmittels, noch die zusätzliche Verwendung von Stabilisatoren, insbesondere von Antioxidantien. Es werden also Amid- und Estergruppen aufweisende Polymere **P** im festen Aggregatszustand erhalten, welche eine gute Rieselfähigkeit aufweisen. Zudem wird das Polymer **P** im festen Aggregatszustand bei der Herstellung nicht verfärbt, da keine Stabilisatoren verwendet werden müssen.

Vorzugsweise weist also das durch das erfindungsgemässe Verfahren hergestellte Polymer **P** weniger als 5 Gew.-%, insbesondere weniger als 1 Gew.-% Lösungsmittel, insbesondere Wasser, bezogen auf das Gesamtgewicht des Polymers **P**, auf. Noch mehr bevorzugt ist das Polymer **P** im Wesentlichen lösungsmittelfrei, vorzugsweise im Wesentlichen wasserfrei. Zu den Lösungsmitteln, welche kaum oder im Wesentlichen gar nicht im Polymer **P** enthalten sind, gehören beispielsweise Hexan, Toluol, Xylol, Methylcyclohexan, Cyclohexan, Dioxan, Alkohole wie beispielsweise Ethanol oder Isopropanol, und Wasser.

Im dritten Schritt können neben der Amidbildung auch Aminsalze entstehen. Um diese Aminsalzbildung zu vermindern und die Ausbeute der Amidierung zu erhöhen, können bevorzugt Alkali- oder Erdalkalihydroxide der Amin-Verbindung **A** beigefügt werden.

Durch das erfindungsgemässe Verfahren wird ermöglicht, dass Amid- und Estergruppen aufweisende Polymere **P** erhalten werden können, die nach dem üblichen polymeranalogen Verfahren nicht oder nur in schlechter Qualität erhalten werden können, da zur Herstellung Lösungsmittel, insbesondere Wasser, verwendet werden, welche die Esterbildung negativ beeinflussen. Weiterhin ermöglicht es dieses Verfahren den Gehalt an Carbonsäure-Gruppen - und damit die lonendichte im Polymer-Hauptkette - sehr einfach zu reduzieren ohne erhöhte thermische Belastung und damit ohne Gefahr der Polyetherspaltung, welche zu einer unerwünschten Vernetzung der Polymere führen würde. Wird die Reduktion der lonendichte im üblichen polymeranalogen Verfahren versucht, beispielsweise durch Erhöhung der Estergruppen, kommt es ab einem bestimmten Veresterungsgrad zu einer sterischen Hinderung, welche die weitere Umsetzung erschwert, bis gar verunmöglicht. Im Gegensatz dazu können durch das erfindungsgemässe Verfahren Amid- und Estergruppen aufweisende Polymer **P** im festen Aggregatszustand in einer hohen Qualität hergestellt werden.
Je nach Menge und Art der Amin-Verbindung **A** können unterschiedliche Eigenschaften des Endproduktes erzielt werden. Es ist deshalb ein weiterer Vorteil des erfindungsgemässen Verfahrens, dass ausgehend von einem Zwischenprodukt, d.h. dem Reaktionsprodukt des ersten Schrittes, einfach und kosteneffizient durch Verwendung unterschiedlicher Amin-Verbindungen oder unterschiedlicher Mengen der Amin-Verbindung **A** mehrere unterschiedliche Amid- und Estergruppen aufweisenden Polymere **P** hergestellt werden können. Dies hat grosse logistische sowie finanzielle Vorteile.
So kann beispielsweise das in den ersten zwei Schritten hergestellte Polymer **P2** im festen Aggregatszustand in grossen Mengen hergestellt und gelagert werden und erst vor Ort mit der gewünschten Amin-Verbindung **A** vermischt werden, um bestimmte Eigenschaften des Endproduktes zu erzielen. Damit das feste Polymer **P2** mit der festen Amin-Verbindung **A** genügend reagieren kann, so dass das Endprodukt Polymer **P** die gewünschte Eigenschaft aufweist, wird bevorzugt nach dem Mischen und vor der Anwendung des Polymers **P** eine gewisse Zeit gewartet, vorzugsweise mindestens 2 Stunden, noch mehr bevorzugt mindestens 12 bis 24 Stunden, noch mehr bevorzugt mindestens 48 Stunden, vorzugsweise 2 bis 10 Tage.

In einer bevorzugten Ausführungsform weist das durch das erfindungsgemässe Verfahren hergestellte Amid- und Estergruppen aufweisende Polymer **P** im wesentlichen die Struktur nach Formel (VI) auf

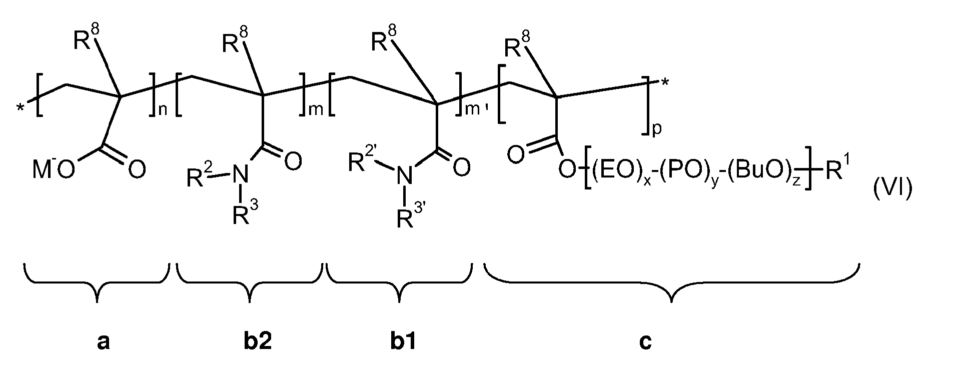

M stellt hierbei ein Kation, insbesondere H⁺, Na⁺, Ca⁺⁺/2, Mg⁺⁺/2, NH₄⁺ oder ein organisches Ammonium dar. Es ist dem Fachmann klar, dass bei den mehrwertigen Ionen ein weiteres Gegenion vorhanden sein muss, das unter anderem auch ein Carboxylat desselben oder eines anderen Moleküls des Polymeren **P** sein kann. Die organischen Ammoniumverbindungen sind insbesondere Tetraalkylammonium oder aber HR₃N⁺, wobei R eine Alkylgruppe insbesondere eine C1- bis C6-Alkylgruppe, bevorzugt Ethyl oder Butyl, darstellt. Organische Ammoniumionen werden insbesondere durch die Neutralisation der Carboxylgruppe mit handelsüblichen teritären Aminen erhalten.
Die Substituenten R⁸ bedeuten unabhängig voneinander ein H oder Methyl. Methyl wird bevorzugt als Substituent R⁸.
Die Substituenten R² und R³ sind bereits bei der Amin-Verbindung **A** der Formel (II) beschrieben worden. Die Substituenten R^{2'} und R^{3'} sind bereits bei der Monoamin-Verbindung **A**' der Formel (II') beschrieben worden. Die Substituenten R¹, EO ,PO, BuO sowie die Indizes x, y und z wurden bereits für die Monohydroxy-Verbindung **E** der Formel (I) beschrieben.
Die Indizes n, m, m' und p bedeuten ganze Zahlen, wobei die Summe n+m+m'+p = 10 - 250, bevorzugt 20 -100, insbesondere 25- 80, ist und n>0, m>0 und p>0 und m' ≥ 0 bedeuten.

Die Abfolge der drei Bausteine **a**, **b1**, **b2** und **c** kann blockweise oder zufällig sein, mit der Ausnahme, dass durch den Anhydridmechanismus der Amidbildung der Baustein **b2** benachbart zu oder in der Nähe von, insbesondere benachbart zu, **a** sein muss.
Die Menge von **a** beträgt 10 bis 90 Mol-%, die von **b1** 0 bis 6 Mol-%, die von **b2** 0.1 bis 40 Mol-%, die von **c** 9.9 bis 89.9 Mol-%, jeweils bezogen auf die Gesamtmolmenge der Bausteine von **a, b1, b2,** und **c** im Polymer **P.** Dabei muss die Molmenge von **b2** kleiner sein als die Molmenge von **a.**

In einer bevorzugten Ausführungsform wird eine Polymethacrylsäure mit einem Polyethylenglykol welches einseitig mit einer Methoxygruppe abgeschlossen ist, verestert und anschliessend schonend gemäss Erfindung mit Monoethanolamin, welches absorbiert oder adsorbiert in oder auf Kieselsäure vorliegt, umgesetzt. Dem Fachmann ist klar, dass das Ethanolamin mit der Kieselsäure auch eine Reaktion eingehen kann und somit an deren Oberfläche gebunden vorliegen kann.

Das Amid- und Estergruppen aufweisende Polymer **P** findet in unterschiedlichen Bereichen Anwendung, insbesondere in der Beton- und Zementtechnologie. Insbesondere kann das Amid- und Estergruppen aufweisende Polymer **P** als Verflüssiger für hydraulisch abbindende Zusammensetzungen, insbesondere Beton und Mörtel, eingesetzt werden. Hierbei kann das Amid- und Estergruppen aufweisende Polymer **P** einer Trockenmischung enthaltend mindestens eine hydraulisch abbindende Substanz, beigemischt werden. Als hydraulisch abbindende Substanz können grundsätzlich alle dem Beton-Fachmann bekannten Substanzen verwendet werden. Insbesondere handelt es sich hier um Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung sind Gips, in Form von Anhydrit, Halbhydrat oder Dihydrat oder gebrannter Kalk. Als hydraulischen abbindende Substanz wird Zement bevorzugt. Weiterhin sind Zuschlagstoffe wie Sand, Kies, Steine, Quarzmehl, Kreiden sowie als Additive übliche Bestandteile wie andere Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumern, Porenbildner möglich.
Das im Wesentlichen wasserfreie, vorzugsweise vollkommen wasserfreie, Amid- und Estergruppen aufweisende Polymer **P** im festen Aggregatszustand kann ein Bestandteil einer hydraulisch abbindenden Zusammensetzung, einer sogenannten Trockenmischung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.
Das Amid- und Estergruppen aufweisende Polymer **P** kann auch einer üblichen hydraulisch abbindenden Zusammensetzung mit oder kurz vor oder kurz nach der Zugabe des Wassers beigegeben werden. Als besonders geeignet gezeigt hat sich hierbei die Zugabe des Amid- und Estergruppen aufweisenden Polymers **P** in Form einer wässrigen Lösung oder Dispersion, insbesondere als Anmachwasser oder als Teil des Anmachwassers.
Das Amid- und Estergruppen aufweisende Polymer **P** verfügt über Eigenschaft als Verflüssiger für hydraulisch abbindende Zusammensetzungen, insbesondere zementöse Zusammensetzungen, das heisst, dass bei in der Zement- und Betontechnologie üblichen Wasser/Zement-(W/Z-)Verhältnissen die resultierende Mischung eine bedeutend grösseres Fliessverhalten aufweist im Vergleich zu einer Zusammensetzung ohne den Verflüssiger. Das Fliessverhalten wird typischerweise über das Ausbreitmass gemessen. Andererseits können Mischungen erzielt werden, die bei gleichem Fliessverhalten bedeutend weniger Wasser benötigen, so dass die mechanischen Eigenschaften der ausgehärteten hydraulisch abbindenden Zusammensetzung stark erhöht sind. Eine spezielle Verwendung stellt die Verwendung als Verflüssiger in Fertigmörteln dar. Das Amid- und Estergruppen aufweisende Polymer **P** kann auch als Dispergiermittel für Dispersionen verwendet werden, insbesondere für Dispersionen, die hydraulische oder nicht hydraulische Bindemittel enthalten, insbesondere für hydraulisch abbindende Zusammensetzungen.

### Beispiele

### 1. Schritt:Veresteruna und Anhydridbildung

In einem Reaktionsgefäss mit Rührer, Thermometer, Vakuum anschluss und Destillationseinrichtung werden 480 g einer 40%igen wässrigen Lösung einer Polymethacrylsäure mit einem mittleren Molekulargewicht von 5000 g/mol vorgelegt. Unter Rühren werden 5 g 50%-ige Schwefelsäure zugegeben. 300 g eines einseitig mit einer Methoxygruppe endgruppenverschlossenen Polyethylenglykols mit einem mittleren Molekulargewicht von 1100 g/mol und 600 g eines einseitig mit einer Methoxygruppe endgruppenverschlossenen Polyethylenglykols mit einem mittleren Molekulargewicht von 3000 g/mol werden als Schmelze zugegeben und die Reaktionsmischung unter Rühren langsam auf 170°C erwärmt. Dabei wird Wasser kontinuierlich abdestilliert. Sobald das Reaktionsgemisch 170°C erreicht hat, wird 30 min. bei dieser Temperatur gerührt. Anschliessend wird unter Vakuum (80-100 mbar) 3.5 Stunden weiter verestert. Die direkte Säurezahl am Ende der Reaktionszeit wurde mit 0.67 mmol COOH/g Polymer bestimmt. Das geschmolzene Polymer wird auf ein flaches Substrat gegossen und erstarrt in den festen Aggregatzustand. Nach dem Auskühlen und Erstarren kann das feste Polymer problemlos vom flachen Substrat abgelöst und in kleine Stücke, insbesondere Schuppen, zerkleinert werden, die in dicht schliessende Gebinde abgepackt werden können. Bezeichnung: **BP1.**

### 2. Schritt: Amidierung

### Beispiel 1

500 g Kieselsäure werden in einen Hobart-Mischer gegeben und unter schwachem Rühren mit 215 g Ethanolamin versetzt. Die Mischung wird 5 Minuten weiter gemischt und anschliessend in eine Glasflasche abgefüllt. Das gut rieselfähige Pulver enthält etwa 30% Ethanolamin. Bezeichnung: **AT1**

550 g festes Polymer **BP1** werden in eine Porzellan Kugelmühle gegeben und dazu wird 60 g **AT1** zugemischt. Diese Mischung enthält somit etwa 18g Ethanolamin. Diese Mischung wird unter Zugabe von Stahlkugeln 12 Stunden gemahlen. Das erhaltene feine weisse Pulver wird abgefüllt. Bezeichnung: **EPA1**

### Beispiel 2

Das Polymer **BP1** wird vor dem Erstarren auf ein flaches Substrat bei etwa Raumtemperatur gegossen. Zur unterkühlten Schmelze bei einer Temperatur von unter 60°C wird **AT1** Pulver aufgestreut, in einer Menge von etwa 60g Pulver **AT1** pro kg Polymerschmelze. Anschliessend erstarrt das Polymer zu einem Feststoff welcher in kleine Stücke, insbesondere Schuppen, zerkleinert wird. Danach werden die kleinen Stücke mittels einer Mühle zu Pulver verarbeitet. Bezeichnung: **EPA2**.

Nach stehen lassen des Pulvers für 1 bis 2 Tage kann gezeigt werden, dass das mit Amin behandelte Polymer andere Eigenschaften besitzt als das unbehandelte.

### Beispielshafte hydraulisch abbindende Zusammensetzungen

Die Wirksamkeit der erfindungsgemässen Polymeren wurde im Mörtel getestet.

| Zusammensetzung der Mörtelmischung 1: **MM1** (Grösstkorn 8mm) | Menge |
|---|---|
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |

Die Sande, der Filler und der Zement und das feste Polymer wurden 1 Minute in einem Hobart-Mischer trocken gemischt. Innerhalb von 30 Sekunden wird das Anmachwasser, zugegeben und noch weitere 2.5 Minuten gemischt. Die Gesamt-Mischzeit nass ist 2.5 Minuten.

**Tabelle 1: Resultate Mörtelversuch: Wasser / Zementwert (w/z Wert) 0.43**

| | Dosierung (In % Wirkstoff auf Zement) | Ausbreitmass nach 0 Min. | Ausbreitmass nach 30 Min. | Ausbreitmass nach 60 Min. |
|---|---|---|---|---|
| Pulver Bsp. 1 **EPA1** | 0.22 | 158mm | 156mm | 150mm |
| Pulver Bsp. 2 **EPA2** | 0.21 | 178mm | 175mm | 170mm |
| Vergleichsbeispiel 1: Pulver ohne Amin **BP1** | 0.2 | 198mm | 166mm | 148mm |

### Messmethoden

### -direkte Säurezahl

Ca. 1 g der Polymerschmelze wird in ca. 30 ml deionisiertem Wasser gelöst und mit 3 Tropfen einer Phenolphthaleinlösung (1% in Ethanol) versetzt.
Mit 0.1N NaOH wird bis zum Farbumschlag titriert.
Säurezahl in mmol COOH/g = *V* / (10 x *m*)
V=Verbrauch an 0.1 N NaOH in ml und *m*=Einwaage der Polymerschmelze in g

### -Ausbreitmass

Das Ausbreitmass des Mörtels wurde gemäss EN 1015-3 bestimmt.

### Resultate

Tabelle 1 zeigt das ausgezeichnete Halten der Verarbeitbarkeit über 60 Minuten von Mörteln mit den erfindungsgemässen Polymeren, während Mörtel mit dem Vergleichspolymer 1 ohne Amin deutlich an Verarbeitbarkeit verliert.
Weiter zeigen diese Mörtelresultate, dass bei der Umsetzung in der dritten Reaktionsstufe (c) eine Reaktion stattfindet. Die Eigenschaften der erfindungsgemässen Polymere unterscheiden sich bezüglich des Haltens der Verarbeitbarkeit der Mörtelmischung deutlich von denen der Ausgangspolymere.

## Patentansprüche

1. Verfahren zum Herstellen eines Amid- und Estergruppen aufweisenden Polymers **P** im festen Aggregatszustand, umfassend die Schritte
a) Umsetzen eines Homo- oder Copolymers **P1** von (Meth)acrylsäure, Itacon- oder Crotonsäure mit mindestens einer Monohydroxy-Verbindung **E** bei einer Temperatur von bis 200°C zu einem Polymer **P2,** so dass neben Estergruppen Anhydridgruppen entstehen,
b) Abkühlen des im Schritt (a) hergestellten Polymers **P2** auf unter 60°C, so dass das Polymer **P2** im festen Aggregatszustand oder als unterkühlte Schmelze vorliegt,
c) Amidierung des Anhydridgruppen aufweisenden und im festen Aggregatszustand oder als unterkühlte Schmelze vorliegenden Polymers **P2** mit mindestens einer Amin-Verbindung **A** bei Temperaturen unter 60 °C,
wobei die im Schritt (c) verwendete Amin-Verbindung **A** im festen Aggregatszustand oder auf oder in einem festen Trägermaterial vorliegt.

2. Verfahren gemäss Anspruch 1, **dadurch gekennzeichnet, dass** das Polymer **P2** nach dem Abkühlen als Pulver, Flocken, Perlen, Platten oder Schuppen vorliegt.

3. Verfahren gemäss einem der Ansprüche 1 oder 2, **dadurch gekennzeichnet, dass** das feste Trägermaterial ein mineralisches Bindemittel, ein hydraulischer Zusatzstoff, Kieselsäure, ein Molekularsieb oder Kreide, vorzugsweise Zement, Gips, Hüttensand oder Kieselsäure ist.

4. Verfahren gemäss einem der Ansprüche 1 bis 3, **dadurch gekennzeichnet, dass** das hergestellte Polymer **P** weniger als 1 Gew.-% Wasser, bezogen auf das Gesamtgewicht des Polymers **P**, aufweist.

5. Verfahren gemäss einem der Ansprüche 1 bis 4, **dadurch gekennzeichnet, dass** das Polymer **P** im Wesentlichen wasserfrei ist.

6. Verfahren gemäss einem der Ansprüche 1 bis 5, **dadurch gekennzeichnet, dass** im Schritt (c) das im festen Aggregatszustand oder als unterkühlte Schmelze vorliegende Polymer **P2** mit der mindestens einen Amin-Verbindung **A** ohne Verwendung eines Lösungsmittels vermischt wird.

7. Verfahren gemäss einem der Ansprüche 1 bis 6, **dadurch gekennzeichnet, dass** der Schritt (a) in Gegenwart einer Säure, insbesondere Schwefelsäure, p-Toluolsulfonsäure, Benzolsulfonsäure, Methansulfonsäure, Phosphorsäure oder phosphorige Säure, bevorzugt Schwefelsäure, erfolgt.

8. Verfahren gemäss einem der Ansprüche 1 bis 7, **dadurch gekennzeichnet, dass** die Monohydroxy-Verbindung **E** ein C6- bis C20-Alkylalkohol ist oder die Formel (1) aufweist
HO-[(EO)ₓ-(PO)_{y}-(BuO)_{z}]-R¹ (I)
wobei x, y, z unabhängig voneinander je die Werte 0 - 250 aufweisen und x+y+z = 3 - 250 ist;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz;
und R¹= Alkylgruppe mit 1-20 Kohlenstoffatomen oder Alkylarylgruppe mit 7 - 20 Kohlenstoffatomen bedeuten.

9. Verfahren gemäss Anspruch 8, **dadurch gekennzeichnet, dass** z = 0 und R¹ = Methyl-, Ethyl-, i-Propyl- oder n-Butylgruppe ist.

10. Verfahren gemäss Anspruch 8 oder 9, **dadurch gekennzeichnet, dass** die Monohydroxy-Verbindung **E** ein einseitig endgruppenverschlossenes Polyalkylenglykol mit einem Molekulargewicht M_{w} von 300 bis 10'000 g/mol, insbesondere von 500 bis 5000 g/mol, bevorzugt von 800 bis 3000 g/mol, ist.

11. Verfahren gemäss einem der vorhergehenden Ansprüche, **dadurch gekennzeichnet, dass** das Homo- oder Copolymer **P1** von (Meth)acrylsäure, Croton- oder Itaconsäure durch Homopolymerisation oder durch Copolymerisation mit mindestens einem weiteren Monomer ausgewählt aus der Gruppe umfassend α- β-ungesättigte Carbonsäuren, α- β-ungesättigte Carbonsäureestern, α- β-ungesättigte Carboxylate, Styrol, Ethylen, Propylen, Vinylacetat sowie Mischungen davon hergestellt ist.

12. Verfahren gemäss Anspruch 11, **dadurch gekennzeichnet, dass** das weitere Monomer ausgewählt ist aus der Gruppe umfassend Methacrylsäure, Acrylsäure, Crotonsäure, Itaconsäure, Maleinsäure, Fumarsäure, sowie deren Salze, Ester und Mischungen.

13. Verfahren gemäss einem der vorhergehenden Ansprüche, **dadurch gekennzeichnet, dass** das Copolymer **P1** ein Copolymer ist aus Acrylsäure und Methacrylsäure sowie deren Salze oder Teilsalze; oder das Homopolymer **P1** eine Polymethacrylsäure oder Polyacrylsäure, bevorzugt eine Polymethacrylsäure, ist, deren Salze oder Teilsalze.

14. Verfahren gemäss einem der vorhergehenden Ansprüche, **dadurch gekennzeichnet, dass** das Homo- oder Copolymer **P1** ein Homo- oder Copolymer ist, welches aus 10 bis 250, bevorzugt 20 bis 100, insbesondere 25 bis 80, Monomerbausteinen aufgebaut ist.

15. Verfahren gemäss einem der vorhergehenden Ansprüche, **dadurch gekennzeichnet, dass** die Amin-Verbindung **A** ein Amin der Formel (II)
R²NH-R³ (II)
ist, wobei
R² und R³ zusammen einen Ring bilden, der gegebenenfalls Sauerstoff-, Schwefel- oder weitere Stickstoffatome enthält;
oder wobei R² und R³ unabhängig voneinander eine Alkylgruppe mit 1 bis 12 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Hydroxyalkylgruppe, insbesondere -CH₂CH₂-OH oder -CH₂CH(OH)CH₃, eine Verbindung der Formel (III), (IV) oder (V) oder H darstellen
-(R⁴-X)ₙR⁵ (III) 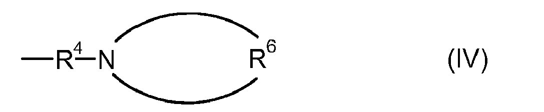
-[(EO)ₓ-(PO)_{y}-(BuO)_{z}]-R¹ (V)
wobei R⁴ unabhängig voneinander eine Alkylengruppe und R⁵ eine C₁- bis C₄-Alkylgruppe, eine Hydroxyalkylgruppe oder H darstellen und X unabhängig voneinander ein S, O oder NR⁷ darstellt, wobei n ein Wert zwischen 1 und 100 ist, und wobei R⁷ unabhängig voneinander eine C₁- bis C₄-Alkylgruppe, eine Hydroxyalkylgruppe oder H darstellt,
wobei R⁶ eine Alkylengruppe mit gegebenenfalls Heteroatomen ist;
x, y, z unabhängig voneinander je die Werte 0 - 250 aufweisen und x+y+z = 3 - 250 ist;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz;
und R¹= Alkylgruppe mit 1-20 Kohlenstoffatomen oder Alkylarylgruppe mit 7 - 20 Kohlenstoffatomen bedeuten.

16. Verfahren gemäss Anspruch 15, **dadurch gekennzeichnet, dass** Verbindung **A** ausgewählt ist aus der Gruppe umfassend Ammoniak, Morpholin, 2-Morpholin-4-yl-ethylamin, 2-Morpholin-4-yl-propylamin, N,N-Dimethylaminopropylamin, Ethanolamin, Diethanolamin, 2-(2-aminoethoxy)ethanol, Dicyclohexylamin, Benzylamin, 2-Phenyl-ethylamin, Polyoxypropylendiamin, N-(2-Hydroxyethyl)ethylendiamin, sowie Mischungen davon.

17. Verfahren gemäss einem der vorhergehenden Ansprüche, **dadurch gekennzeichnet, dass** im ersten Schritt (a) zusätzlich zur Monohydroxy-Verbindung **E** eine Monoamin-Verbindung **A'** eingesetzt wird.

18. Verfahren gemäss Anspruch 17, **dadurch gekennzeichnet, dass** die Monoamin-Verbindung **A'** ein Amin der Formel (II')
R^{2'}NH-R^{3'} (II')
ist, wobei
R^{2'} und R^{3'} zusammen einen Ring bilden, der gegebenenfalls Sauerstoff-, Schwefel- oder weitere Stickstoffatome enthält;
oder wobei R^{2'} und R^{3'} unabhängig von einander eine Alkylgruppe mit 8 bis 20 Kohlenstoffatomen, eine Cycloalkyl-Gruppe mit 5 bis 9 Kohlenstoffatomen, eine Aralkyl-Gruppe mit 7 bis 12 Kohlenstoffatomen, eine Verbindung der Formel (III'), (IV') oder (V') oder H darstellen
-R^{4'}-X(R^{5'})ᵥ (III') 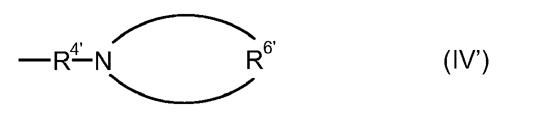
-[(EO)ₓ-(PO)_{y}-(BuO)_{z}]-R¹ (V')
wobei R^{4'} eine Alkylengruppe und R^{5'} eine C₁- bis C₄-Alkylgruppe darstellen und X ein S, O oder N darstellt, und v = 1 für X = S oder O, oder v=2 für X = N ist; und R^{6'} eine Alkylengruppe, mit gegebenenfalls Heteroatomen ist,
x, y, z unabhängig voneinander je die Werte 0 - 250 aufweisen und x+y+z = 3 - 250 ist;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz;
und R¹= Alkylgruppe mit 1-20 Kohlenstoffatomen oder Alkylarylgruppe mit 7 - 20 Kohlenstoffatomen bedeuten.

19. Verfahren gemäss Anspruch 18, **dadurch gekennzeichnet, dass** die Verbindung **A'** der Formel (II') die Substituenten R^{2'} der Formel (V') und R^{3'} gleich H aufweist und insbesondere ein α-Methoxy- ω -Amino-Oxyethylen-Oxypropylen-Copolymer oder ein α-Methoxy-ω-Amino-Polyoxyethylen, bevorzugt α-Methoxy-ω-Amino-Polyoxyethylen, ist.

20. Verfahren gemäss einem der vorhergehenden Ansprüche, **dadurch gekennzeichnet, dass** die Temperatur des ersten Schrittes (a) zwischen 140°C und 200°C ist und die Temperatur des zweiten Schrittes (b) zwischen 10°C und 60°C, bevorzugt zwischen 15°C und 40°C, ist.

21. Verfahren gemäss einem der vorhergehenden Ansprüche, **dadurch gekennzeichnet, dass** das Amid- und Estergruppen aufweisendes Polymer **P** die Formel (V1) aufweist 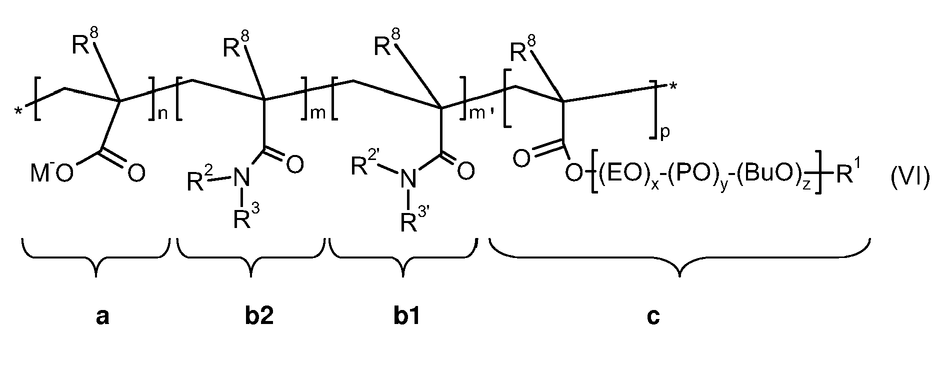 wobei M = Kation, insbesondere H⁺, Na⁺, Ca⁺⁺/2, Mg⁺⁺/2, NH₄⁺ oder ein organisches Ammonium bedeutet;
R⁸ unabhängig von einander ein H oder Methyl, insbesondere Methyl, bedeuten;
und
R² und R³ zusammen einen Ring bilden, der gegebenenfalls Sauerstoff-, Schwefel- oder weitere Stickstoffatome enthält,
oder
R² und R³ unabhängig von einander eine Alkylgruppe mit 1 bis 12 Kohlenstoffatome, eine Cycloalkyl-Gruppe mit 5 bis 9 Kohlenstoffatomen, eine Aralkyl-Gruppe mit 7 bis 12 Kohlenstoffatomen, eine Hydroxyalkylgruppe, insbesondere -CH₂CH₂-OH oder -CH₂CH(OH)CH₃, eine Verbindung der Formel (III), (IV) oder (V) oder H darstellen
-(R⁴-X)ₙR⁵ (III) 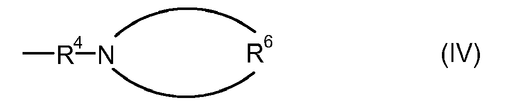
-[(EO)ₓ-(PO)_{y}-(BuO)_{z}]-R¹ (V)
wobei R⁴ unabhängig voneinander eine Alkylengruppe und R⁵ eine C₁- bis C₄-Alkylgruppe, eine Hydroxyalkylgruppe oder H darstellen und X unabhängig voneinander ein S, O oder NR⁷ darstellt, wobei n ein Wert zwischen 1 und 100 ist, und wobei R⁷ unabhängig voneinander eine C₁- bis C₄-Alkylgruppe, eine Hydroxyalkylgruppe oder H darstellt,
wobei R⁶ eine Alkylengruppe mit gegebenenfalls Heteroatomen ist;
und
R^{2'} und R^{3'} zusammen einen Ring bilden, der gegebenenfalls Sauerstoff-, Schwefel- oder weitere Stickstoffatome enthält,
oder
R^{2'} und R³' unabhängig von einander eine Alkylgruppe mit 8 bis 20 Kohlenstoffatome, eine Cycloalkyl-Gruppe mit 5 bis 9 Kohlenstoffatomen, eine Aralkyl-Gruppe mit 7 bis 12 Kohlenstoffatomen, eine Verbindung der Formel (III'), (IV') oder (V') oder H darstellen
-R^{4'}-X'(R^{5'})ᵥ (III') 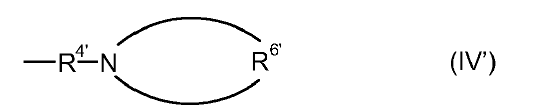
-[(EO)ₓ-(PO)_{y}-(BuO)_{z}]-R¹ (V')
wobei R^{4'} eine Alkylengruppe und R^{5'} eine C₁- bis C₄-Alkylgruppe darstellen und X' ein S, O oder N darstellt, und v = 1 für X' = S oder O, oder v=2 für X' = N ist; und R^{6'} eine Alkylengruppe, mit gegebenenfalls Heteroatomen ist, und
n+m+m'+p = 10 - 250, bevorzugt 20 - 100, und n>0, m>0, p>0 und m'≥0 bedeuten,
und wobei
x, y, z unabhängig voneinander je die Werte 0 - 250 aufweisen und x+y+z = 3 - 250;
EO=Ethylenoxy, PO=Propylenoxy, BuO=Butylenoxy oder Isobutylenoxy bedeuten, mit einer Reihenfolge der EO-, PO-, BuO-Bausteine in irgendeiner möglichen Sequenz; und
R¹= Alkylgruppe mit 1-20 Kohlenstoffatomen oder Alkylarylgruppe mit 7 - 20 Kohlenstoffatomen bedeuten.

22. Verfahren gemäss Anspruch 21, **dadurch gekennzeichnet, dass** die Menge von **a** 10 bis 90 Mol-%, die von **b1** 0 bis 6 Mol-%, die von **b2** 0.1 bis 40 Mol-%, die von **c** 9.9 bis 89.9 Mol-%, beträgt, jeweils bezogen auf die Gesamtmolmenge der Bausteine von **a, b1, b2,** und **c** im Polymer **P**, und wobei die Molmenge von **b2** kleiner ist als die Molmenge von **a**.

23. Verwendung eines, nach einem Verfahren gemäss einem der Ansprüche 1 bis 22 hergestellten, Amid- und Estergruppen aufweisenden Polymers **P** als Verflüssiger für hydraulisch abbindende Zusammensetzungen, insbesondere für Beton, Mörtel oder Gips.

24. Verwendung eines, nach einem Verfahren gemäss einem der Ansprüche 1 bis 22 hergestellten, Amid- und Estergruppen aufweisenden Polymers **P** als Dispergiermittel für wässrige Dispersionen.

25. Trockenmischung umfassend mindestens ein hydraulisch abbindendes Pulver und mindestens ein Amid- und Estergruppen aufweisendes Polymer **P**, welches nach einem Verfahren gemäss einem der Ansprüche 1 bis 22 hergestellt worden ist.
